# EUROPEAN PATENT APPLICATION

(11) **EP 2 076 068 A1**
(43) Date of publication of application: **01.07.2009**
(21) Application number: 07291623.2
(22) Date of filing: 26.12.2007
(51) Int. Cl.: H04W 4/00

(54) **Handover method and apparatus in a wireless telecommunications network**

(71) Applicant: Alcatel Lucent, 75008 Paris (FR)
(72) Inventor: Hofmann, Dirk, 74321 Bietigheim-Bissingen (DE)
(74) Representative: Cockayne, Gillian

(57) **Abstract**

A wireless telecommunications network may include parts that operate at different packet transfer delays, so that a mobile terminal undergoing handover from one node to another experiences different delays before and after handover. An additional delay is applied during the handover process to packets sent to the mobile terminal via the node at the smaller delay so as to reduce the difference between the two delays. The additional delay may be applied at an anchor node connecting parts of the wireless network of different radio access technology types or at other parts of the network. Information regarding packet transfer delays may stored and accessed to determine the delays for nodes involved in handover and/or obtained by measurements made during a call, for example.

## Description

### FIELD OF THE INVENTION

The present invention relates to a method and apparatus for handing over a mobile terminal from a first node to a second node in a wireless telecommunications network. It is particularly, but not exclusively, applicable to heterogeneous wireless networks and to vertical handover in such networks.

### BACKGROUND OF THE INVENTION

Currently, wireless telecommunications networks are being developed that incorporate a plurality of different radio access technology (RAT) types to form heterogeneous mobile networks. A heterogeneous network provides benefits for the user and for the operator as it permits alternative possibilities for how a user connects to the network. The user can obtain the best connection from a choice of available options by steering his radio connections to the most adequate access system. The operator is able to carry out load sharing to optimize network performance and the network utilization.

When a combination of different RAT types is included in a heterogeneous mobile network, there can be large differences in packet transfer times via respective different RATs, so that packets sent to a mobile terminal via one RAT might take longer to reach it than when sent by another RAT included in the network. Average packet transfer delay for a packet flow is dependent on the architecture of the RAT, its technology type, processing times at network nodes, the amount of congestion and so on. This can lead a mobile terminal connected to a heterogeneous network to receive packets at one delay via a connection to one RAT and at another delay via another RAT included in the network, so that there is a "fast" RAT via which the mobile terminal receives packets at a relatively smaller delay compared to that of a "slow" RAT.

During handover of a mobile terminal from a fast RAT to a slow RAT, if the disparity in average packet transfer delays is too large, the mobile terminal receiver may observe a break in the packet flow it receives because the IP packets need more time to reach the receiver following the handover than before handover. This can be particularly noticeable for real time applications, such as speech, so that the handover process no longer appears to the user to be seamless. Conversely, during handover from a slow RAT to a fast RAT, the receiver may observe an overtaking of IP packets.

For real time applications, the mobile terminal receiver may include a play out buffer which is large enough to avoid breaks in the IP packet flow or has the capability for IP packet reordering. A play out buffer stores voice data, for example, until sufficient data has been accumulated, when it is then decoded to be presented to the user. For video stream communications, play out buffers of arbitrary size can be used. However, for conversational services, the play out buffer must be limited in size so as to avoid interruptions in the conversation induced by the play out buffer.

For non-real time applications, if IP packets are received too late following a handover from a fast RAT to a slow RAT, a TCP error handling mechanism may be initiated. This involves re-transmission of packets already sent to the mobile terminal even though the packets were not actually lost in the original transmission.

### BRIEF SUMMARY OF THE INVENTION

According to a first aspect of the invention, a method for handing over a mobile terminal from a first node to a second node in a wireless telecommunications network includes the steps of:
determining a first average packet transfer delay for packets sent via the first node to the mobile terminal for an established connection and a second average packet transfer delay for packets sent via the second node to the mobile terminal for an established connection; and
when one of the first and second delays is smaller than the other, applying an additional delay during the handover process to packets sent to the mobile terminal via the node at the smaller delay.

By using the invention, the effects of a difference between the first and second delays during an established connection may be reduced. An established connection is one where there is no current handover execution taking place. The additional delay applied during handover increases the smaller delay so that there is less likelihood of interruptions in a call where it is transferred from a node where the mobile terminal receives packets at a smaller delay to one where it receives them at a larger delay. Thus, it also reduces the probability of re-transmission procedures being initiated, reducing additional transmissions and usage of resources. Where the mobile terminal is handed over to a node from which it receives packets at a smaller delay than it did when connected to the source node with a larger delay, applying the additional delay reduces the risk of packets from the second node overtaking those from the first node, thus reducing the need to provide for re-ordering of received packets. The invention is particularly advantageous when applied to real time applications, such as speech, where breaks in reception at the mobile terminal, or overtaking of packets at the receiver, are particularly undesirable. Additionally, use of the invention may enable smaller play out buffers to be used in mobile terminals than might otherwise be the case.

The additional delay may be applied when there is any difference between the first and second delays. Alternatively, it may be applied only if the difference between the two delays exceeds a threshold value, so that where the difference is insufficient to cause significant performance issues, then no additional delay is imposed on packets transmitted via the faster path with the smaller packet transfer delay.

In one method in accordance with the invention, the additional delay applied to the faster packets remains at a fixed amount over time. The additional applied delay reduces the size of the step change between the first and second delays and this may be sufficient to avoid the issues that arise when larger differences exist between the first and second delays. In another method in accordance with the invention, the amount of additionally applied delay is varied during the handover process so as to provide a smooth change in average packet transfer delay. A combination of these two approaches may be used, with a fixed delay being applied where the difference between the first and second delays falls within one range of values and a variable delay where the difference is larger, for example.

In one method in accordance with the invention, the network is a heterogeneous network and the first and second nodes are included in respective different Radio Access Technology, RAT, parts. The invention may also be implemented in a homogeneous network, being potentially beneficial where different parts of such a homogeneous network provide different packet transfer delays, for example.

Conveniently, all of the delay is applied at one point in the transmission path for the packets, but it could instead be applied at different points along the path. Where the network is a heterogeneous network, at least part of the delay may be applied at an anchor node connecting different RAT parts. In another method in accordance with the invention, at least part of the delay is applied at the one of the first and second nodes via which packets are transferred at a smaller delay for an established connection. The additional delay may be applied at nodes such as routers, base stations or other types of network nodes.

In a method in accordance with the invention, information about average packet transfer delays is stored in a store, such as a memory or database, and the store is accessed to determine the first and second delays. The information about the delays may be provided by measurement, and/or calculated by analysing the network performance, architecture or other pertinent aspects that impact on the transmission of packets to a mobile terminal connected to a node. Measurements from the mobile terminal may be used to determine at least one of the first and second delays, for example, by using test transmissions during the handover preparation phase or monitoring receipt of data packets.

According to a second aspect of the invention, a wireless communications network comprises: first and second nodes, there being a first average packet transfer delay for packets sent via the first node to a mobile terminal for an established connection and a second average packet transfer delay for packets sent via the second node to a mobile terminal for an established connection; a comparator for comparing the first and second delays when a mobile terminal is to be handed over from the first node to the second node; and a delay mechanism which, when one of the first and second delays is faster than the other, applies an additional delay during the handover process to packets sent to the mobile terminal via the node at the smaller delay.

According to a third aspect of the invention, a wireless network node comprises a delay mechanism which, when a packet transfer delay to a mobile terminal is smaller via one node when it is in an established connection therewith than via another node when it is in an established connection therewith, during a handover process when a mobile terminal is handed over between the nodes, applies an additional delay to packets that are sent via the node at the smaller delay to the mobile terminal.

### BRIEF DESCRIPTION

Some embodiments and methods in accordance with the present invention are now described by way of example only, and with reference to the accompanying drawings, in which:
Figure 1 schematically illustrates a heterogeneous wireless network;
Figure 2 is a schematic explanatory diagram relating to the operation of the network shown in Figure 1;
Figure 3 schematically illustrates a wireless network node comprising a delay mechanism in accordance with the invention; and
Figure 4 is a schematic explanatory diagram relating to operation of the network shown in Figure 1.

### DETAILED DESCRIPTION

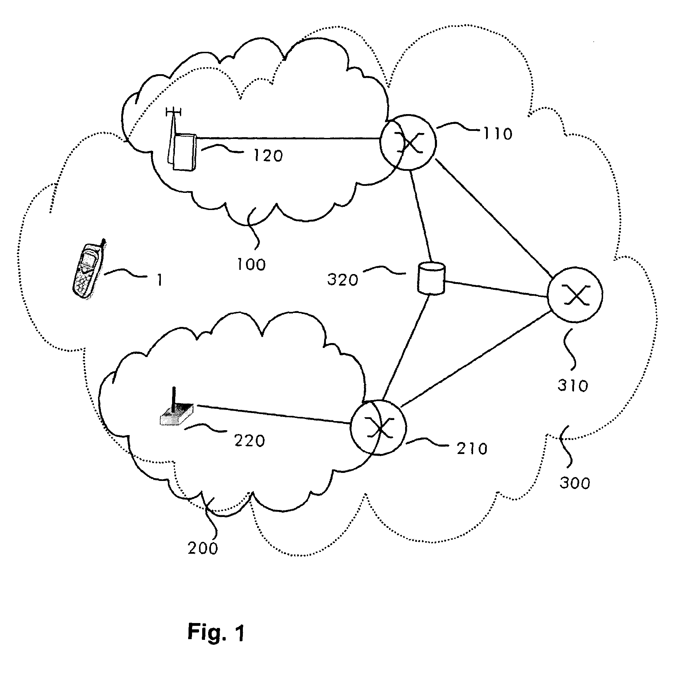

With reference to Figure 1, a heterogeneous wireless network 300 includes a first RAT 100 and a second RAT 200 connected via access routers 110 and 210 respectively to a common anchor node 310 and may include other nodes but these are not shown. The network also includes a third RAT (not shown) which is connected to the anchor node 310. A mobile terminal 1 is capable of connecting to the first RAT 100 via a first node, that is, a base station 120, and to the second RAT 200 via a second node, that is, access point 220. The particular RAT selected during the connection process is that which will provide the optimum performance taking into account various parameters such as channel quality, network loading and the location of the mobile terminal. The network includes a database 320 that stores information regarding the average packet transfer delays when IP packets are sent via each of the RATs to a mobile terminal connected to the RAT. The access routers 110, 210 and the anchor node 310 have connections to the database 320 to enable them to access its stored information.

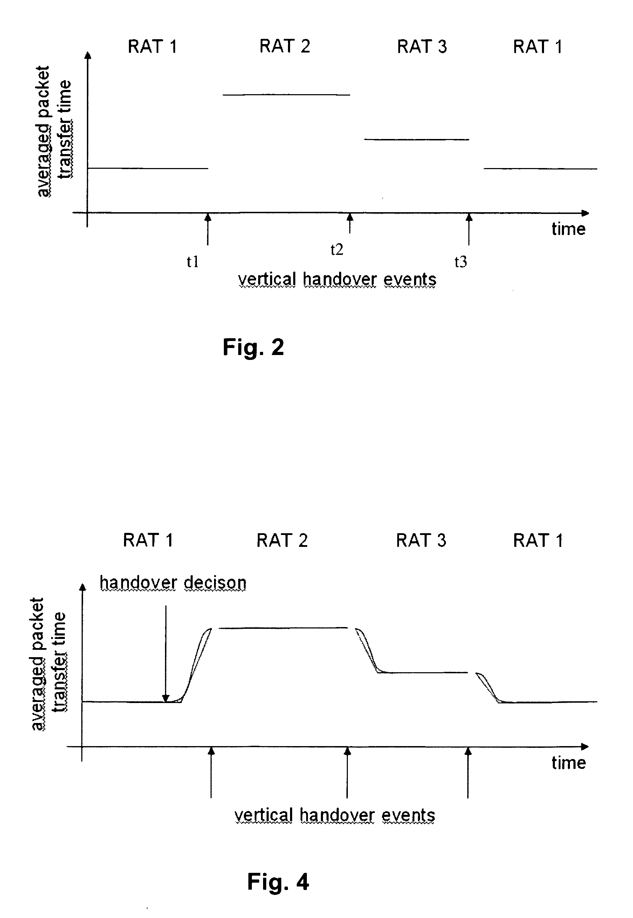

In the network 300, if the mobile terminal is in an established connection with the first RAT 100, it receives IP packets via the base station 120 at a smaller average packet transfer delay than it would if it were in an established connection with the second RAT 200 via access point 220. The difference in the delays occurs because the packet transfer delay is dependent on the architecture of the RAT, its technology type, processing times at network nodes, the amount of congestion and so on. The average packet transfer delay of the third RAT is a value between those of the first and second RATs 100 and 200, as illustrated in Figure 2. Averaged packet transfer times versus time are shown for three vertical handover procedures between different RATs. The packet transfer time function shows a step like behaviour, which results in packet delays at the receiver for the first handover and might result in packet overtaking for the second and third handovers. Initially, the mobile terminal 1 is in an established connection with the first RAT 100. Through measurements taken by the mobile terminal, a decision is taken to release the connection with the first RAT 100 and hand over the mobile terminal 1 to the second RAT 200, at time t1. At a later time, t2, vertical handover to the third RAT is carried out and then at t3 to the first RAT 100.

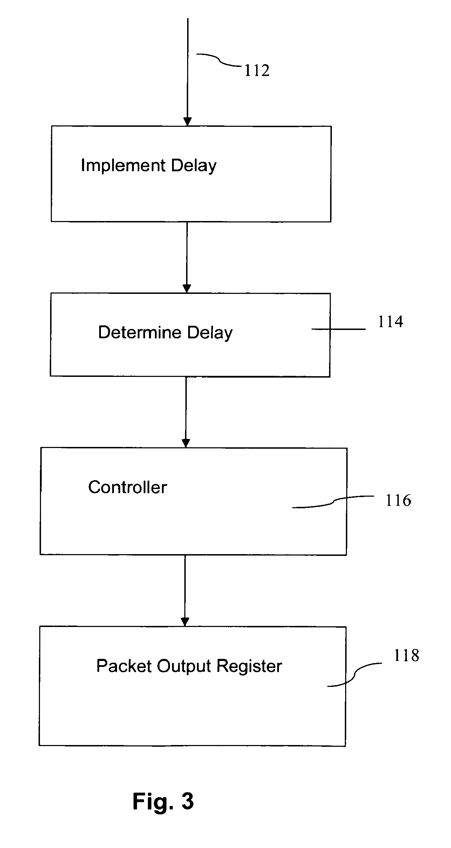

For the handover at t 1 from RAT 100 to RAT 200, when the decision to handover is made, the anchor node 310 accesses the database 320 to determine the average packet transfer delay via RAT 100 and that via the other RAT 200. It compares the two delays and, if the difference exceeds a threshold value thus indicating that there is a great enough difference that it would be significantly beneficial to reduce it, the anchor node 310 sends a message to the access router 110 included in the fast RAT 100. The access routers 110 and 210 each include a delay mechanism, as shown in Figure 3. The access router 110 included in the fast RAT 100 receives the message from the anchor node 310 at 112. The message informs the access router 110 that it should apply an additional delay to packets during the imminent handover process. The message may also include the value of the difference between the average packet transfer times or the access router may itself directly access the database 320 to obtain this information. The amount of delay is determined at 114 by using the difference between the delays and the time over which the delay is to be applied so as to give a gradual change in the applied delay during the handover process. The change in delay over time may be linear, shown as a dotted line, or alternatively, exponential, shown by a chain broken lines in Figure 4. The controlled delay is applied via a controller 116 to a register 118 via which IP packets are output from the access router 110. The delay is applied after the handover decision has been made and before handover is executed.

When subsequently, a decision is taken to handover from the second RAT 200 to the third RAT, as the third RAT is faster than the second RAT, an additional delay is applied at the access router associated with the third RAT. In this case, as handover is from a slow RAT to a fast RAT, the additional delay is applied after handover execution, as shown in Figure 4.

The delay mechanism may be placed in any router on the path between the central anchor 310 and the access routers 110 and 210, or in another node such as nodes 120 and 220 of the radio access network 100 and 200 within the heterogeneous mobile network 300.

For an optimal operation of the delay mechanism, the averaged packet transfer times of each RAT between the central anchor of all RATs and the receiver must be roughly known. This knowledge can be based on actual measurements or on known average values stored in a central database. Measurements from the mobile terminal 1 may be used to determine the average packet transfer delays.

Use of the invention permits lossless and seamless vertical handover procedure to be supported in heterogeneous mobile networks. It may also be applied to horizontal handover procedures, if the handover procedure is accompanied with a large change in the routing path

The present invention may be embodied in other specific forms and implemented by other methods without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A method for handing over a mobile terminal from a first node to a second node in a wireless telecommunications network, including the steps of:
determining a first average packet transfer delay for packets sent via the first node to the mobile terminal for an established connection and a second average packet transfer delay for packets sent via the second node to the mobile terminal for an established connection; and
when one of the first and second delays is smaller than the other, applying an additional delay during the handover process to packets sent to the mobile terminal via the node at the smaller delay.

2. The method as claimed in claim 1 and including varying the amount of applied delay during the handover process so as to provide a smooth change in average packet transfer delay.

3. The method as claimed in claim 1 or 2 and wherein the network is a heterogeneous network and the first and second nodes are included in respective different Radio Access Technology, RAT, parts.

4. The method as claimed in claim 3 and including applying at least part of the delay at an anchor node connecting different RAT parts.

5. The method as claimed in any preceding claim and including applying at least part of the additional delay at the one of the first and second nodes via which packets are transferred at a smaller delay for an established connection.

6. The method as claimed in any preceding claim and including storing information about average packet transfer delays in a store and accessing the store to determine the first and second delays.

7. The method as claimed in any preceding claim and including using measurements from the mobile terminal to determine at least one of the first and second delays.

8. The method as claimed in any preceding claim and wherein the delay is applied for packets that belong to conversational services.

9. A wireless communications network comprising: first and second nodes, there being a first average packet transfer delay for packets sent via the first node to a mobile terminal for an established connection and a second average packet transfer delay for packets sent via the second node to a mobile terminal for an established connection; a comparator for comparing the first and second delays when a mobile terminal is to be handed over from the first node to the second node; and a delay mechanism which, when one of the first and second delays is smaller than the other, applies an additional delay during the handover process to packets sent to the mobile terminal via the node at the smaller delay.

10. A wireless network node comprising a delay mechanism which, when a packet transfer delay to a mobile terminal is smaller via one node when it is in an established connection therewith than via another node, during a handover process when a mobile terminal is handed over between the nodes, applies an additional delay to packets that are sent via the node at the smaller delay to the mobile terminal.

11. A database being connectable for consultation by a wireless telecommunications network during handover and comprising information about average packet transfer delays for different paths through the network.
